# EUROPÄISCHE PATENTSCHRIFT

(11) **EP 0 423 640 B1**
(45) Veröffentlichungstag und Bekanntmachung des Hinweises auf die Patenterteilung: **09.06.1993**
(21) Anmeldenummer: 90119597.4
(22) Anmeldetag: 12.10.1990
(51) Int. Cl.: E03F 3/04, F16L 55/16, F16L 55/18

(54) **Vorrichtung zum Herstellen einer abdichtenden Verbindung zwischen einer Kanalrohrleitung und einer Zulaufleitung mit einem Anschlussstück**
Device for constructing a sealing connection between a main conduit and a side conduit with a connector
Dispositif pour la fabrication d'un raccord étanche entre un conduit principal et un conduit adducteur comprenant une pièce-raccord

(30) Priorität: 19.10.1989 DE 3934832
(43) Veröffentlichungstag der Anmeldung: 24.04.1991
(73) Patentinhaber: HERMANN HEMSCHEIDT MASCHINENFABRIK GMBH & CO., D-42002 Wuppertal (DE)
(72) Erfinder: Behnert, Holger, W-5600 Wuppertal 2 (DE); Peschel, Walter, Ing. grad., W-5600 Wuppertal 1 (DE); Heinz, Norbert, Dipl.-Ing., W-5630 Remmscheid (DE)

(56) Entgegenhaltungen:
- EP-A- 0 335 223
- DE-A- 3 618 963

## Beschreibung

Die Erfindung betrifft eine Vorrichtung zum Herstellen einer abdichtenden Verbindung zwischen einer Kanalrohrleitung und einer Zulaufleitung mit einem Anschlußstück, das aus einem dehnbaren Faservlies besteht und den Übergangsbereich zwischen der Anschlußöffnung und der Zulaufleitung abdeckt, wobei die auf einem Gleitschlitten gelagerte und in Längsrichtung der Kanalrohrleitung verfahrbare Vorrichtung zum Einbringen des Anschlußstückes einen Dehnkörper mit einem gegen die Kanalrohrwandung andrückbaren, zylindertopfförmigen Druckbehälter aufweist, der an der zur Kanalrohrwandung gerichteten, offenen Stirnseite durch eine dehnbare Membran aus einem hochelastischen Material druckdicht verschlossen ist.

Aus der europäischen Patentanmeldung EP-A-0 335 223 A1 ist ein Anschlußstück zum Verbinden einer nicht begehbaren Kanalrohrleitung mit einer Zulaufleitung bekannt, das den Randbereich um die Zulaufleitung herum abdeckt und eine vorgefertigte Anschlußöffnung aufweist. Am Rand der Anschlußöffnung vom Anschlußstück ist ein dehnbares Faservlies befestigt, das die Anschlußöffnung überdeckt und sich mit einem Dehnkörper in die Zulaufleitung hineindrücken läßt.

Das mit einem aushärtbaren Harz getränkte Faservlies verschließt dann den Übergangsbereich zwischen der Anschlußöffnung und der Zulaufleitung und dichtet diesen ab. Das Faservlies läßt sich von dem Dehnkörper ohne Schwierigkeiten in die Zulaufleitung hineindrücken, wenn es im Randbereich der Anschlußöffnung an einem vorgefertigten Anschlußrohr befestigt ist, das in einen aus Kurzrohren zusammengesetzten Inliner einer Kanalrohrleitung eingebaut wird.

Vorgefertigte Anschlußrohre mit anlaminiertem Faservlies sind jedoch wenig geeignet, wenn die Inlinerrohre zügig hintereinander eingebracht werden sollen und folglich eine Unterbrechung des Einziehvorgangs zum Aushärten der Anschlußverbindung unerwünscht ist.

Aus der Praxis ist bekannt, in diesem Fall Anschlußrohre zu verwenden, die lediglich vorgefertigte Anschlußöffnungen, aber kein anlaminiertes Faservlies aufweisen. Dabei werden in die Anschlußöffnungen nachträglich vorgeformte Anschlußstücke gesetzt, bei denen das Faservlies an einem der Anschlußöffnung angepaßten Stützring befestigt ist. Eine derartige Hutmanschette hat aber den Nachteil, daß sie beim Einführen in die Anschlußöffnung über den Dehnkörper abrutschen kann, wodurch die Herstellung eines dichten Anschlusses nicht mehr gewährleistet ist. Die Verwendung vorgeformter Anschlußstücke setzt außerdem voraus, daß die Anschlußöffnung im Anschlußrohr weitgehend zentrisch zur Mündung der Zulaufleitung ausgerichtet ist, weil das Anschlußstück anderenfalls wiederum durch eine ungleichmäßige Anlage am Rand der Öffnung verrutschen wird. Die gleichen Probleme treten auf beim Abdichten der Einmündung einer Zulaufleitung in eine nicht mit einem Inliner versehene Kanalrohrleitung.

Es ist Aufgabe der vorliegenden Erfindung, die gattungsgemäße Vorrichtung so zu verbessern, daß eine dauerhafte Abdichtung der Anschlußöffnung und Anbindung der Zulaufleitung an die Kanalrohrleitung sichergestellt ist.

Diese Aufgabe wird mit den im kennzeichnenden Teil des Anspruches 1 angegebenen Mitteln gelöst.

Vorteilhafte Ausgestaltungen der Erfindung sind Gegenstand der Unteransprüche.

Die Vorrichtung gemäß der vorliegenden Erfindung besitzt einen auf dem Druckbehälter innerhalb des Dehnkörpers abgestützten Druckschild, auf dem die drucklose Membran flächig aufliegt. Das Faservlies vom Anschlußstück findet auf der Wölbung des Druckschildes eine rutschsichere Auflage. Das Anschlußstück wird mit dem Druckschild an den Randbereich der Anschlußöffnung herangeführt und dort fest angedrückt. Danach wird der Dehnkörper mit dem Druckmittel gedehnt, wodurch das sich öffnende Faservlies bis in die Zulaufleitung hineingedrückt wird und dabei den Übergangsbereich abdichtet und dicht verschließt. Mit dem Druckschild wird das Anschlußstück am Randbereich der Anschlußöffnung so fest angedrückt, daß das Faservlies sogar in nicht zentrischer Position, d.h. in einer nicht deckungsgleich zur Zulaufleitung ausgerichteten Einbaulage, nicht gegenüber der Öffnung verrutschen kann, sondern sich den Konturen im Übergangsbereich anpaßt und die Öffnung abdichtet. Somit kann auch die Anschlußöffnung im Anschlußrohr eines Inliners erheblich größer als die Einlauföffnung der Zulaufleitung ausgeführt werden. Der seitliche Überstand des Druckschildes über die Anschlußöffnung gewährleistet die vollständige Anlage des Stützringes im Randbereich der Anschlußöffnung und gibt dem sich öffnenden Faservlies den notwendigen Halt. Es kommt also nicht mehr auf das deckungsgleiche Ausrichten der Inliner-Anschlußrohre an, wodurch das Einziehen der Rohre erheblich erleichert wird. Mit weiten Anschlußöffnungen werden ebenso Querschnittsverengungen im Einlauf infolge gegeneinander versetzter Öffnungsquerschnitte vermieden. Der Druckschild bietet weiter den Vorteil, daß mit einem Gerät unterschiedliche Einlaufquerschnitte der einmündenden Zulaufleitungen abgedichtet werden können.

Zum Abdichten der Anschlußöffnungen wird vorzugsweise ein kreisringförmiger Druckschild eingesetzt. Der Druckschild kann auch kreisscheibenförmig ausgebildet sein.

Nach einem weiteren Merkmal der Erfindung ist der Druckschild durch einen unterhalb des Druckbehälters angeordneten, mit einem Druckmittel befüllbaren Balg andrückbar, der zwischen einer Bodenplatte und einer Kopfplatte eingespannt ist, wobei die Bodenplatte auf dem Gleitschlitten abgestützt ist und die Kopfplatte an der Unterseite des Druckbehälters anliegt.

Dabei nimmt der Balg in der Regel eine im Verhältnis zur Verstellhöhe niedrige Einbauhöhe ein und erzeugt mit einem gering vorgespannten Druckmittel (z.B. Druckluft) eine relativ hohe Druckkraft.

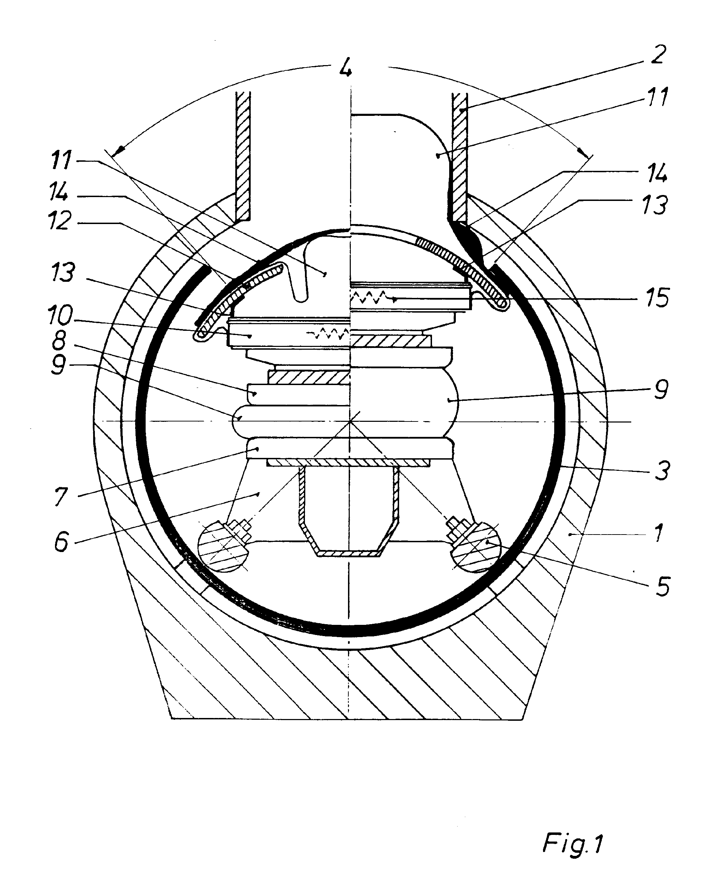

Die Erfindung wird nachfolgend an einem in der Zeichnung dargestellten Ausführungsbeispiel näher erläutert. Die einzige Figur zeigt eine in den Kanalrohrquerschnitt eingezogene Vorrichtung mit kreisringförmigen Druckschild zum Abdichten der Anschlußöffnung eines in eine Kanalrohrleitung eingezogenen Inliners.

Eine Kanalrohrleitung 1 ist im Bereich einer seitlich einmündenden Zulaufleitung 2 im Querschnitt dargestellt. In die Kanalrohrleitung 1 ist ein Anschlußrohr 3 eines aus Kurzrohren zusammengesetzten Inliners eingezogen. Das Anschlußrohr 3 weist im Bereich der Zulaufleitung 2 eine Anschlußöffnung 4 auf, deren Öffnungsquerschnitt weit größer bemessen ist als der Querschnitt der Zulaufleitung 2. Mit 5 sind die Kufen eines gestellförmigen Gleitschlittens 6 bezeichnet, der auf der Sohle der Kanalrohrleitung 1 von einem beiderseits angeschlagenen, jedoch in der Zeichnung nicht dargestellten Seilzug in Längsrichtung der Kanalachse bewegt werden kann. Zwischen einer auf dem Schlitten 6 abgestützten Bodenplatte 7 und einer darüber liegenden Kopfplatte 8 ist ein Balg 9 eingespannt, der mit Druckluft aufgebläht wird, um die Kopfplatte 8 sowie einen flachen, zylindertopfförmigen Druckbehälter 10 anzuheben. Dieser ist an der zur Kanalrohrwandung gerichteten, offenen Stirnseite durch eine Membran 11 aus einem hochelastischem Material druckdicht verschlossen. Der Druckbehälter 10 und die Membran 11 bilden zusammen einen Dehnkörper, der über ein nicht dargestelltes, entsperrbares Rückschlagventil mit einem Druckmittel, vorzugsweise ebenfalls Druckluft, befüllbar ist.

Innerhalb des Dehnkörpers 10, 11 ist ein Druckschild 12 mit Halterungen 13 über dem Druckbehälter 10 abgestützt. Der Druckschild 12 weist eine Wölbung auf, die in ihrer Kontur dem Randbereich der abzudichtenden Anschlußöffnung 4 angepaßt ist, wobei der Randbereich bei einem Inliner von der gekrümmten Innenwandung des in die Kanalrohrleitung 1 eingezogenen Anschlußrohres 3 gebildet wird. Der Druckschild 12 überdeckt den Randbereich der Anschlußöffnung 4 mit seitlichem Überstand, wo er flächig zur Anlage gebracht und angedrückt wird, sobald der Druckbehälter 10 vom Druckmittel im Balg 9 angehoben wird. Auf der Oberseite des Druckschildes 12 liegt die Membran 11 des Dehnkörpers 10, 11 flächig an.

Der Druckschild 12 ist zur Abdichtung der Anschlußöffnung 4 des eingezogenen Anschlußrohres 3 oder allgemein einer Kanalrohrwandung im Bereich einer Einlauföffnung vorzugsweise kreisringförmig ausgebildet. Der Druckschild 12 kann aber ebenso kreisscheibenförmig oder ellipsenförmig ausgebildet sein.

Die Vorrichtung kann um eine nicht dargestellte, in der Kanalrohrachse oder parallel dazu auf dem Schlitten 6 angeordnete Schwenkachse seitenverstellbar gelagert werden, um seitlich einmündende Zulaufleitungen abzudichten. Auf dem Schlitten 6 kann weiterhin eine nicht dargestellte Fernsehkamera montiert werden zwecks Beobachtung des Einziehvorgangs und der Abdichtarbeiten von der Tagesoberfläche aus.

Die Anschlußöffnung wird mit einem Anschlußstück 14 abgedichtet, das aus einem nicht sichtbaren, elastischen Stützring sowie einem damit verbundenen, dehnbaren Faservlies besteht, das mittig eingeschnitten ist und vor dem Einbringen in die Kanalrohrleitung 1 mit einem aushärtbaren Harz getränkt wird. Das Faservlies 14 wird passend über dem Druckschild 12 auf die Membran 11 gelegt, die zuvor mit einem Trennmittel beschichtet wurde. Dann wird die Vorrichtung mit dem Seilzug zur Einbaustelle gezogen, wo die Zulaufleitung 2 in die Kanalrohrleitung 1 mündet, und mit Hilfe einer Fernsehkamera zur Anschlußöffnung 4 ausgerichtet. Mit dem Balg 9 wird der Druckbehälter 10 und der darauf abgestützte Druckschild 12 angehoben, so daß das Anschlußstück 14 mit dem elastischen Stützring und den unmittelbar daran anschliessenden Teil des Faservlieses gegen den Randbereich der Anschlußöffnung 4 angedrückt wird. Mit Druckluft wird die Membran 11 in die Zulaufleitung 2 hinein gedehnt. Das mitgeführte Faservlies des Anschlußstückes 14 überdeckt daraufhin den Übergangsbereich zwischen der Anschlußöffnung 4 und der Zulaufleitung 2 und dichtet ihn ab, wobei es sich an die Innenwandung der Zulaufleitung 2 anlegt. Der Dehnkörper 10, 11 bleibt dann so lange in der Öffnung gespannt, bis das Anschlußstück 14 mit dem Faservlies nach dem Antrocknen des Harzes eine feste Verbindung mit den Anlageflächen eingegangen ist. Der Aushärtevorgang kann durch eine in den Druckbehälter 15 eingebaute Heizung 15 abgekürzt werden. Zuletzt wird der Dehnkörper 10, 11 entlastet und abgesenkt, wobei sich die Membran 11 an dem Trennmittel von dem ausgehärteten Faservlies des Anschlußstückes 14 löst.

## Patentansprüche

1. Vorrichtung zum Herstellen einer abdichtenden Verbindung zwischen einer Kanalrohrleitung und einer Zulaufleitung mit einem Anschlußstück, das aus einem dehnbaren Faservlies besteht und den Übergangsbereich zwischen der Anschlußöffnung und der Zulaufleitung abdeckt, wobei die auf einem Gleitschlitten gelagerte und in Längsrichtung der Kanalrohrleitung verfahrbare Vorrichtung zum Einbringen des Anschlußstückes einen Dehnkörper mit einem gegen die Kanalrohrwandung andrückbaren, zylindertopfförmigen Druckbehälter aufweist, der an der zur Kanalrohrwandung gerichteten, offenen Stirnseite durch eine dehnbare Membran aus einem hochelastischen Material druckdicht verschlossen ist, gekennzeichnet durch einen Druckschild (12) mit einer dem Randbereich der abzudichtenden Anschlußöffnung (4) angepaßten Wölbung, der innerhalb der dehnbaren Membran (11) mit Abstand über dem Druckbehälter (10) abgestützt ist und den Randbereich der Anschlußöffnung (4) mit seitlichem Überstand überdeckt.

2. Vorrichtung nach Anspruch 1, dadurch gekennzeichnet, daß der Druckschild (12) kreisringförmig ausgebildet ist.

3. Vorrichtung nach Anspruch 1, dadurch gekennzeichnet, daß der Druckschild (12) kreisscheibenförmig ausgebildet ist.

4. Vorrichtung nach einem oder mehreren der Ansprüche 1 bis 3, dadurch gekennzeichnet, daß der Druckschild (12) von einem mit einem Druckmittel befüllbaren Balg (9) gegen den Randbereich der Anschlußöffnung (4) andrückbar ist, der zwischen einer Bodenplatte (7) und einer Kopfplatte (8) eingespannt ist, wobei die Bodenplatte (7) auf dem Gleitschlitten (6) abgestützt ist und die Kopfplatte (8) an der Unterseite des Druckbehälters (10) anliegt.

## Claims

1. Apparatus for making a sealing-tight connection between a main pipe and a branch pipe, the apparatus having a connecting piece which comprises an extensible fibre mat and which covers the transition region between the connecting opening and the branch pipe and being mounted on a slide so as to be movable in the longitudinal direction of the main pipe, the apparatus also being provided with a cylindrical pot-shaped pressure container for pressing against the wall of the main pipe and for introducing the connecting piece, the open end face of the pressure container facing the wall of the main pipe being closed in a pressure-tight manner by an extensible diaphragm of highly resilient material, characterised by a pressure plate (12) having a curvature adapted to the edge region of the connecting opening (4) to be sealed, the pressure plate being mounted inside the extensible diaphragm (11) at a distance above the pressure container (10) and projecting laterally beyond and covering the edge region of the connecting opening (4).

2. Apparatus according to claim 1, characterised in that the pressure plate (12) is circular.

3. Apparatus according to claim 1, characterised in that the pressure plate (12) is disc-shaped.

4. Apparatus according to one or more of claims 1 to 3, characterised in that a bellows (9) for filling with a pressure medium is adapted to press the pressure plate (12) against the edge region of the connecting opening (4), the bellows being clamped between a baseplate (7) and a head plate (8), the baseplate (7) being mounted on the slide (6) and the head plate (8) bearing against the underside of the pressure container (10).

## Revendications

1. Dispositif pour réaliser entre une canalisation d'égout tubulaire et une canalisation d'amenée une liaison étanche comprenant une pièce de raccordement qui se compose d'une nappe de fibres expansible et qui recouvre la zone de transition entre l'ouverture de raccordement et la canalisation d'amenée, cependant que le dispositif qui est destiné à la mise en place de la pièce de raccordement, qui est monté sur un chariot glissant et qui peut être déplacé dans la direction longitudinale de la canalisation d'égout tubulaire, comporte un corps expansible comprenant un réservoir sous pression en forme de pot cylindrique qui peut être serré contre la paroi du tube d'égout et qui est fermé d'une manière étanche à la pression, sur le côté frontal ouvert dirigé vers la paroi du tube d'égout, par une membrane expansible constituée par un matériau fortement élastique, caractérisé par une plaque de pressage (12) qui présente une courbure adaptée à la zone du bord de l'ouverture de raccordement (4) à rendre étanche, qui est appuyée à distance au-dessus du réservoir sous pression (10), à l'intérieur de la membrane expansible (11), et qui recouvre la zone du bord de l'ouverture de raccordement (4) avec un dépassement latéral.

2. Dispositif selon la revendication 1, caractérisé par le fait que la plaque de pressage (12) est réalisée en forme de couronne circulaire.

3. Dispositif selon la revendication 1, caractérisé par le fait que la plaque de pressage (12) est réalisée en forme de disque circulaire.

4. Dispositif selon une ou plusieurs des revendications 1 à 3, caractérisé par le fait que la plaque de pressage (12) peut être serrée contre la région du bord de l'ouverture de raccordement (4) par un soufflet qui peut être rempli par un fluide sous pression et qui est monté entre une plaque de fond (7) et une plaque supérieure (8), la plaque de fond (7) étant appuyée sur le chariot glissant (6) et la plaque supérieure (8) portant sur le côté inférieur du réservoir sous pression (10).
